Europäisches Patentamt

European Patent Office

Office européen des brevets

(19)

(11) Veröffentlichungsnummer: **0 099 096**
**A1**

(12) # EUROPÄISCHE PATENTANMELDUNG

(21) Anmeldenummer: 83106783.0

(22) Anmeldetag: 11.07.83

(51) Int. Cl.³: **C 01 B 25/01**
**C 05 B 13/02, C 22 B 1/00**

(30) Priorität: 14.07.82 DE 3226306
16.11.82 DE 3242354

(43) Veröffentlichungstag der Anmeldung:
25.01.84 Patentblatt 84/4

(84) Benannte Vertragsstaaten:
BE DE FR IT NL SE

(71) Anmelder: HOECHST AKTIENGESELLSCHAFT
Postfach 80 03 20
D-6230 Frankfurt am Main 80(DE)

(72) Erfinder: von Piessen, Helmold, Dr.
Kugelherrnstrasse 16
D-6240 Königstein/Taunus(DE)

(72) Erfinder: Baechle, Hans Tuisko, Dr.
Am Rech 1
D-6246 Glashütten/Taunus(DE)

(54) Verfahren zur Abtrennung von Schwermetallionen aus Rohphosphat.

(57) Gegenstand der Erfindung ist ein Verfahren zur Abtrennung von Cadmium oder Quecksilber aus Rohphosphat, bei welchem das Rohphosphat mit Halogenen, Halogenwasserstoffen oder Halogenverbindungen bei 400 -1100°C und bei 0,001 bis 50 bar behandelt wird.

EP 0 099 096 A1

**0099096**

HOECHST AKTIENGESELLSCHAFT   HOE 82/F 146 K   Dr.AU/mk

Verfahren zur Abtrennung von Schwermetallionen aus
Rohphosphat

Die vorliegende Erfindung betrifft ein Verfahren, bei
dem durch Erhitzung des Rohphosphats in Gegenwart von
Halogenen oder Halogenverbindungen eine Abtrennung von
Schwermetallionen aus Rohphosphat erzielt wird.

Phosphorhaltige Düngemittel werden vielfach durch sauren
Aufschluß von Phosphorit oder Apatit hergestellt. Unter
der Einwirkung von Mineralsäure wird das schwerlösliche
Tricalciumphosphat des Rohphosphats zersetzt. Die Calciumsalze der eingesetzten Mineralsäuren müssen anschließend
abgetrennt werden, um die entstandene rohe Phosphorsäure
als Produkt zu erhalten. Im Rohphosphat enthaltene metallische Verunreinigungen wie Cadmium, Quecksilber, Blei,
Thallium und Arsen verbleiben größtenteils in der Phosphorsäure. Da diese Säure nicht für alle Verwendungszwecke geeignet ist, wurden bereits zahlreiche Versuche
unternommen, um sie von unerwünschten metallischen Verunreinigungen zu befreien. Für die Verarbeitung roher
Phosphorsäure zu Düngemitteln boten die bisherigen Versuchsergebnisse aber bisher keinen technisch günstigen
Weg.

In der US Patentschrift 3 133 791 ist ein Verfahren
zur Abtrennung von Eisen aus Rohphosphat beschrieben,
wobei das Rohprodukt bei Temperaturen im Bereich von
400°C bis 1000°C mit einem definierten Gemisch aus
Chlorwasserstoff und Chlor behandelt wird.

Gemäß US Patentschrift 2 629 650 kann Eisen aus Rohphosphat
mit Chlorwasserstoff bei 350° - 400°C entfernt werden.

Zur Abtrennung von Schwermetall-Elementen aus der zweiten Nebengruppe des Periodensystems wie Cadmium und Quecksilber, insbesondere Cadmium, aus Rohphosphat war bisher kein wirtschaftliches Verfahren bekannt. Zur thermischen Entfernung muß man Temperaturen um 1200°C aufwenden. Bisher existierten lediglich Verfahren zur Extraktion bzw. Abscheidung von Cadmium aus Rohphosphorsäure (s. Kongreßbericht, Seite 6, Cadmium Seminar am 20. Nov. 1980 in Rosslyn, Virginia). Die Entfernung von Cadmium aus dem Rohphosphat ist von besonderer Schwierigkeit, da die Cadmiumionen Gitterstellen des Calciums im Kristall besetzen und deshalb im Rohphosphatmineral besonders fest eingebaut sind (s. oben zitierten Kongreßbericht).

Es wurde nun überraschenderweise gefunden, daß Schwermetallionen, insbesondere Elemente der zweiten Nebengruppe wie Cadmium oder Quecksilber in einfacher Weise aus Rohphosphat abgetrennt werden können. Das Verfahren ist dadurch gekennzeichnet, daß man Rohphosphat mit Halogenen, Halogenwasserstoffen, organischen oder anorganischen Halogenverbindungen oder einem Gemisch derselben bei Drucken zwischen 0,001 und 50 bar, vorzugsweise zwischen 0,01 und 20 bar, insbesondere bei Normaldruck sowie bei Temperaturen im Bereich von 400° - 1100°C, vorzugsweise bei Temperaturen zwischen 500° - 800°C, behandelt. Das Rohphosphat kann gegebenenfalls anschließend mit Wasser extrahiert werden. Das Verfahren findet bevorzugt Anwendung zur Abtrennung von Cadmium.

Als Halogene und Halogenwasserstoffe kommen bevorzugt Chlor, Brom, Chlorwasserstoff und Bromwasserstoff, insbesondere bevorzugt Chlor und Chlorwasserstoff infrage. Es können auch vorteilhaft Brom und/oder Bromwasserstoff im Gemisch mit Chlorwasserstoff, oder auch Brom im Gemisch mit Chlor und Chlorwasserstoff angewendet werden.

Als organische Halogenverbindungen können halogenierte Kohlenwasserstoffe z.B. $CCl_4$, $C_2Cl_4$, $C_2H_2Cl_4$, $C_2H_2Br_4$, $CHCl_3$, $C_2HCl_3$, oder Säurehalogenide, z.B. $COCl_2$, $(COCl)_2$, insbesondere $CCl_4$ und als anorganische Halogenverbindungen, z.B. $NH_4Cl$, $NH_4Br$, Metallchloride wie $SiCl_4$, $AlCl_3$, $FeCl_3$, oder chlorierte Schwefelverbindungen wie $SO_2Cl_2$ oder $S_2Cl_2$, insbesondere $NH_4Cl$, eingesetzt werden.

Die Halogene oder Halogenwasserstoffe können als solche für das erfindungsgemäße Verfahren eingesetzt oder während des Prozesses aus anderen Verbindungen freigesetzt werden, z.B. durch Zugabe von Chloriden in Kombination mit schwerflüchtigen Mineralsäuren, wie Phosphorsäure oder deren Anhydride, gegebenenfalls in Gegenwart von Oxidationsmitteln wie Sauerstoff oder Natriumperchlorat.

Es ist möglich, die Halogene bzw. halogenhaltigen Verbindungen dem Rohphosphat vor dem Prozeß zuzumischen oder während der Röstung zuzugeben. Die Halogene bzw. halogenhaltigen Verbindungen können sowohl in reinem Zustand als auch im Gemisch mit inerten Gasen oder verdampfbaren inerten Lösemitteln angewendet werden.

Der Röstprozeß wird in einem Reaktor durchgeführt, wobei verschiedene Reaktortypen wie beispielsweise Wirbelschichtöfen, Drehrohröfen, Etagen-Röstöfen, Herdröstöfen, Staubröstöfen oder Sinterröstapparate zum Einsatz kommen können.

Die für das erfindungsgemäße Verfahren erforderliche Zugabe der halogenhaltigen Verbindungen beträgt mindestens die dem Schwermetallgehalt des Rohphosphats stöchiometrisch entsprechende Menge, in der Regel aber ein Mehrfaches davon. Vorteilhaft wurden im erfindungsgemäßen Verfahren die Halogene bzw. Halogenverbindungen direkt eingesetzt, wobei zweckmäßigerweise ein Mengenstrom von 0,3 bis 10 Normliter/h $cm^2$

des Halogens, Halogenwasserstoffs oder der verdampften halogenhaltigen Verbindung gegebenenfalls zusammen mit einem Inertgas durch den Reaktor geleitet wird. Die Verweilzeiten können hierbei zwischen 1 und 60 Minuten betragen, vorteilhafterweise zwischen 10 und 30 Minuten. Abhängig vom Reaktortyp sind auch größere oder kleinere Durchsatzmengen möglich.

Das Rohphosphat kann zweckmäßigerweise im gemahlenem Zustand dem Reaktor zugeführt werden, beispielsweise in einer Feinheit von 100 - 200 /um Korndurchmesser.

Erfindungsgemäß ist ein Zusatz von Eisen oder Eisenverbindungen, insbesondere von Eisen(III)chlorid zum Rohphosphat im Bereich von 1 bis 10 Gew.%, bezogen auf Rohphosphat vor Durchführung des halogenierenden Röstprozesses vorteilhaft, da dann der Gehalt des unerwünschten Schwermetalls noch weiter abgesenkt werden kann. Dies beruht offensichtlich nicht auf einem direkten Verdrängungsprozeß von beispielsweise Cadmium- gegen Eisenionen, da zugesetzte Natriumionen (in Form von Natriumchlorid) den Effekt des Eisen(III)chlorid nicht zeigen.

Das erfindungsgemäße Verfahren kann auch zur Abtrennung von Blei, Thallium oder Arsen aus Rohphosphat eingesetzt werden.

Nach der halogenierenden Röstung weist das Rohphosphat einen Halogengehalt von etwa 1 bis 3 % auf. Da ein solcher Halogengehalt die weitere Verarbeitung des Rohphosphats zur Herstellung von Düngemitteln durch sauren Aufschluß gemäß dem Odda-Verfahren stören würde, kann sich an die halogenierende Röstung eine Nachbehandlung des Rohphosphats anschließen, wobei man dieses nach dem Erkalten mit Wasser, das weitgehend frei von Halogenionen ist, extrahiert.

0099096

- 5 -

Im allgemeinen reicht es aus, wenn mit dem Waschprozeß so lange fortgefahren wird, bis ein Halogenidgehalt des Rohphosphats von 0,05 % erreicht ist. Der Waschprozeß kann in bekannter Weise durch Digerieren, Aufschlämmen, Filtrieren o.ä. vorgenommen werden. Das benutzte Wasser kann nach Abtrennung von Halogenidionen, z.B. mittels eines Ionenaustauschers, in den Waschprozeß zurückgeführt werden.

Die Erfindung wird durch die nachfolgenden Beispiele näher erläutert.

## Beispiel 1

Togo-Phosphat mit einem Gehalt von 35,5 % $P_2O_5$, 50,2 % CaO, 1,1 % $Fe_2O_3$, 1,1 % $Al_2O_3$, 2,2 % $H_2O$ und 58 ug Cd/g wurde in einem elektrisch beheizten Röhrenofen, der mit einem Rohr aus Quarzglas (∅ 35 mm) ausgestattet war, unter den in der folgenden Tabelle I genannten Bedingungen mit Chlor behandelt. Die Cadmiumkonzentrationen der Proben wurden durch Atomabsorption bestimmt.

## Tabelle I

| Versuch | Temp. °C | Verweilzeit min | Chormenge Nl/h | Restgehalt an Cd µg/g | Chloridgehalt des Rohphosphats nach der Röstung % |
|---|---|---|---|---|---|
| 1 | 595 | 30 | 22,5 | 59 | 0,35 |
| 2 | 700 | 30 | 22,5 | 5 | 2,2 |
| 3 | 745 | 30 | 22,5 | 4 | 2,4 |
| 4 | 800 | 10 | 22,5 | 7 | 1,7 |
| 5 | 800 | 20 | 22,5 | 4 | 2,2 |
| 6 | 800 | 40 | 22,5 | 1 | 2,5 |

Nl = Normliter

## Beispiel 2

Es wurde wie im Beispiel 1 beschrieben verfahren, aber anstelle Chlor Chlorwasserstoff verwendet. Nachfolgende Tabelle 2 gibt die Versuchsergebnisse wieder.

### Tabelle II

| Ver-such | Temp. °C | Verweil-zeit min | Menge an Chlor-wasserstoff Nl/h | Restgehalt an Cd µg/g | Chloridgehalt des Rohphosphats nach der Röstung % |
|---|---|---|---|---|---|
| 7 | 600 | 30 | 18,6 | 43 | 1,9 |
| 8 | 700 | 30 | 18,6 | 13 | 2,7 |
| 9 | 795 | 30 | 18,6 | 2 | 2,9 |

## Beispiel 3

Es wurde gemäß Beispiel 1 verfahren, aber dem Rohphosphat zuvor 10 % Natriumchlorid bzw. 5 % Eisen(III)-chlorid zugemischt. Wie Tabelle III zeigt, führt die Behandlung nur im Falle des Eisen(III)chlorids zu einer Verbesserung der Resultate:

### Tabelle III

| Ver-such | Temp. °C | Verweil-zeit min | Chlor-menge Nl/h | Zusatz an NaCl oder $FeCl_3$ | Restgehalt an Cd µg/g |
|---|---|---|---|---|---|
| 10 | 610 | 30 | 22,5 | NaCl | 54 |
| 11 | 800 | 30 | 22,5 | NaCl | 38 |
| 12 | 595 | 30 | 22,5 | $FeCl_3$ | 34 |

Beispiel 4

Das Rohphosphat wurde nach der chlorierenden Röstung, wie sie in Beispiel 1 beschrieben ist, mit destilliertem Wasser gewaschen (Verhältnis Rohphosphat zu Wasser 1 : 5), filtriert und mit etwas Wasser (Verhältnis Rohphosphat zu Wasser 2 : 1) nachgewaschen. Der Chloridanteil konnte so größtenteils beseitigt werden.

Tabelle IV

| Ver- such | Temp. °C | Verweil- zeit min | Chlormenge Nh/h | Restgehalt an Cd µg/g | Rohphosphat Chlorgehalt (%) | |
|---|---|---|---|---|---|---|
| | | | | | vor dem Waschen | nach dem Waschen |
| 13 | 700 | 20 | 22,5 | n.b. | 1,7 | - |
| 14 | 795 | 20 | 22,5 | n.b. | 2,1 | - |
| 15 | 700 | 20 | 22,5 | 15 | - | 0,05 |
| 16 | 795 | 20 | 22,5 | 6,2 | - | 0,03 |

Beispiel 5

Togo-Phosphat mit einem Gehalt von 53 ugCd/g wurde in einem elektrisch beheizten Rohrofen, der mit einem Rohr aus Quarzglas (Ø 35 mm) ausgestattet war, unter den in der folgenden Tabelle genannten Bedingungen mit einem Gemisch aus Stickstoff und $CCl_4$ behandelt. Zur Herstellung des Gemischs wurde Stickstoff bei ca 50°C durch flüssigen Tetrachlorkohlenstoff geleitet. Die Cadmiumkonzentration der Proben wurden durch Atomabsorption bestimmt.

| Ver- such | Temp. °C | Verweil- zeit min | Stickstoff Nl/h | $CCl_4$ Nl/h | $CCl_4$ Vol.% | Restgehalt an Cd µg/g |
|---|---|---|---|---|---|---|
| 17 | 500 | 30 | 4,2 | 3,6 | 46,2 | 53 |
| 18 | 700 | 30 | 4,8 | 3,9 | 44,8 | 25 |
| 19 | 800 | 30 | 4,8 | 3,9 | 44,8 | 7,8 |

Beispiel 6

Togo-Phosphat wurde mit 10 % Ammoniumchlorid vermischt und in dem Gemisch ein Gehalt von 48 ugCd/g analysiert. Von dem Gemisch wurden Proben (30 g) im Rohrofen gemäß Beispiel 1 im Luftstrom erhitzt. Die Cadmiumgehalte der Proben gibt in Abhängigkeit von der Temperatur die Tabelle wieder:

| Versuch | Temp. °C | Verweil- zeit min | Luft Nl/h | Restgehalt an Cd µg/g |
|---------|----------|-------------------|-----------|-----------------------|
| 20      | 500      | 30                | 8,3       | 55                    |
| 21      | 700      | 30                | 8,3       | 42                    |
| 22      | 800      | 30                | 8,3       | 13                    |

Beispiel 7

Über Togo-Phosphatproben (35-40 g) mit einem Gehalt von 53 ugCd/g wurde im Rohrofen ein Gemisch aus Ammoniumchloriddampf und Luft geleitet. Die Rohphosphatproben wurden auf die in der Tabelle genannten Temperaturen erhitzt. Nach der Behandlung wurden folgende Cadmiumkonzentrationen bestimmt:

| Ver- such | Temp. °C | Verweil- zeit min | Luft Nl/h | Menge an ver- dampfendem $NH_4Cl/g$ / 30 min / | Restgehalt an Cd µg/g |
|-----------|----------|-------------------|-----------|------------------------------------------------|-----------------------|
| 23        | 500      | 30                | 4,15      | 6,51                                           | 56                    |
| 24        | 700      | 30                | 4,15      | 22,72                                          | 16                    |
| 25        | 800      | 30                | 4,15      | 11,58                                          | 14                    |

PATENTANSPRÜCHE:

1) Verfahren zur Abtrennung von Cadmium oder Quecksilber aus Rohphosphat, dadurch gekennzeichnet, daß man das Rohphosphat mit Halogenen, Halogenwasserstoffen, organischen oder anorganischen Halogenverbindungen oder einem Gemisch derselben bei Drucken zwischen 0,001 und 50 bar und Temperaturen im Bereich von $400^{\circ} - 1100^{\circ}$C behandelt.

2) Verfahren nach Anspruch 1, dadurch gekennzeichnet, daß man bei Drucken zwischen 0,01 und 20 bar arbeitet.

3) Verfahren nach Ansprüchen 1 und 2, dadurch gekennzeichnet, daß man bei Temperaturen im Bereich von $500^{\circ} - 800^{\circ}$C arbeitet.

4) Verfahren nach Ansprüchen 1 bis 3, dadurch gekennzeichnet, daß man als organische Halogenverbindung $CCl_4$ einsetzt.

5) Verfahren nach Ansprüchen 1 bis 4, dadurch gekennzeichnet, daß man als anorganische Halogenverbindung $NH_4Cl$ einsetzt.

6) Verfahren nach Ansprüchen 1 bis 5, dadurch gekennzeichnet, daß man als Halogene Chlor oder Brom und als Halogenwasserstoffe Chlor- oder Bromwasserstoff einsetzt.

7) Verfahren gemäß Ansprüchen 1 bis 6, dadurch gekennzeichnet, daß man dem Rohphosphat zusätzlich Eisen oder Eisenverbindungen zumischt.

8) Verfahren gemäß Ansprüchen 1 - 7, dadurch gekennzeichnet, daß man dem Rohphosphat Eisen(III)chlorid zumischt.

9) Verfahren gemäß Ansprüchen 1 und 6, dadurch gekennzeichnet, daß man die Halogene oder Halogenwasserstoffe während des Verfahrens aus anderen Verbindungen freisetzt.

**Europäisches Patentamt**

## EUROPÄISCHER RECHERCHENBERICHT

EP 83 10 6783

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 383 181 (M.N. WOYSKI et al.)<br>* Ansprüche 1-7 * | | C 01 B 25/01<br>C 05 B 13/02<br>C 22 B 1/00 |
| A | US-A-2 773 736 (C.A. HOLLINGSWORTH)<br>* Ansprüche 1-5 * | | |
| A | FR-A-1 083 310 (OSAKEYHTIÖ VUOKSENNISKA AB)<br>* Ansprüche 1, 2 * | | |
| A,D | US-A-3 133 791 (R.D. LAIB et al.)<br>* Ansprüche 1-5 * | | |

| RECHERCHIERTE SACHGEBIETE (Int. Cl. ³) |
|---|
| C 01 B 25/00<br>C 05 B 11/00<br>C 05 B 13/00<br>C 22 B 1/00<br>C 22 B 17/00<br>C 22 B 43/00 |

Der vorliegende Recherchenbericht wurde für alle Patentansprüche erstellt.

| Recherchenort | Abschlußdatum der Recherche | Prüfer |
|---|---|---|
| BERLIN | 28-09-1983 | ASSOGNA R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82